(19) Europäisches Patentamt
European Patent Office
Office européen des brevets

(11) **EP 4 691 702 A1**

(12) **EUROPEAN PATENT APPLICATION**

(43) Date of publication:
**11.02.2026 Bulletin 2026/07**

(21) Application number: **24193837.2**

(22) Date of filing: **09.08.2024**

(51) International Patent Classification (IPC):
***B25J 9/16*** *(2006.01)*

(52) Cooperative Patent Classification (CPC):
**B25J 9/1664; B25J 9/161**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
• **Ngo, Anh Vien
72147 Nehren (DE)**
• **Gieselmann, Robert
10044 Stockholm (DE)**

(54) **METHOD FOR VISION-BASED ROBOT MOTION PLANNING USING OBJECT-CENTRIC LATENT STATES**

(57)    Various aspects relate to a method (200) for robot motion planning, the method including: receiving (202) an image sequence which ends at a point in time and shows objects in a surrounding of a robot (101) during a prior control of the robot; inputting (204) the image sequence into an encoder to predict a current latent state which represents a respective latent object state for each object of the objects at the point in time; generating (206), using a rapidly exploring random tree, RRT, approach, a latent state graph starting from the current latent state, wherein each predicted latent state of the latent state graph represents a respective predicted latent object state for each object of the objects; determining (208), by applying a policy for solving a Markow Decision Process on the latent state graph, a control trajectory for controlling the robot to achieve a goal state.

Fig. 1

EP 4 691 702 A1

**Description**

Prior Art

Reinforcement learning (RL) may be used to solve decision-making problems for controlling a robot to solve object manipulation tasks. To improve the learned behavior and/or the sample-efficiency of the RL, the RL may be combined with a model which simulates interactions with the robot's environment (then being referred to as model-based RL). For long-horizon decision-making problems, robot motion planning may be combined with the model-based RL.

In R. Gieselmann, et al.: "Expansive Latent Planning for Sparse Reward Offline Reinforcement Learning", 7th Conference on Robot Learning (CoRL 2023), Atlanta, USA (in the following referred to as reference [1]) a sampling-based robot motion planning employing the expansive space trees (EST) algorithm within the model-based RL is described.

Disclosure of the Invention

The present disclosure relates to a method for robot motion planning which allows to solve long-horizon decision-making problems using sparse-reward visual (offline) RL for vision-based robotic manipulation.

This is achieved by defining (in contrast to reference [1]) object-centric latent states (with each of the latent states representing a respective latent object state for each object in the surrounding of the robot). The object-centric representation of latent states allows, for example, to use more powerful graph neural network dynamics models. Further, the method disclosed herein employs a rapidly exploring random tree, RRT, approach, thereby providing an improved efficiency of the online planning and/or robustness to plan feasible paths over long temporal horizons. RRT-based, sampling-based robot motion planning may allow for a faster exploration of the configuration space as compared to other approaches, such as EST. Global sampling random (latent) states for the RRT approach may be accomplished by using a diffusion probabilistic model (short: diffusion model) trained on the latent states in the object-centric latent state space.

According to various embodiments, the (computer-implemented) method for robot motion planning includes: receiving an (e.g., RGB) image sequence ending at a corresponding point in time, wherein the image sequence shows one or more (e.g., a plurality of) objects in a surrounding of a robot device during a prior control of the robot device; inputting the image sequence into an encoder to predict a current latent state, wherein the current latent state represents a respective latent object state for each object of the one or more objects at the corresponding point in time; generating, using a rapidly exploring random tree, RRT, approach, a latent state graph starting from the current latent state, wherein each predicted latent state of the latent state graph represents a respective predicted latent object state for each object of the one or more objects; determining, by applying a (global) policy for solving a Markow Decision Process (MDP) on the latent state graph, a control trajectory for controlling the robot device to achieve a goal state.

In the following, various examples are described.

Example 1 is the method for robot motion planning as described above.

In Example 2, the subject matter of Example 1 can optionally include that generating the latent state graph includes: (globally) sampling (from a (object-centric) latent space) a plurality of random latent states using a diffusion probabilistic model; determining, using each random latent state of the plurality of random latent states, and adding new latent states to the latent state graph in accordance with the RRT approach.

Using the diffusion probabilistic model allows to globally sample from the object-centric latent state space which then allows to employ the RRT approach.

In Example 3, the subject matter of Example 2 can optionally include that generating the latent state graph includes determining a context state representing a context of the surrounding of the robot device, wherein the diffusion probabilistic model is configured to generate each (random latent state) of the plurality of random latent states according to a probability distribution which is conditioned on the context state.

Using the context state can ensure that each generated random latent state is relevant given the current configuration of the technical system (e.g., the robotic device).

In Example 4, the subject matter of Example 2 or 3 can optionally include that the diffusion probabilistic model is configured to generate each (random latent state) of the plurality of random latent states using the goal state; wherein optionally the diffusion probabilistic model is configured to generate a respective random latent state of the plurality of random latent states using a probability distribution having a mean value in the vicinity of the goal state.

This induces a bias to generate random latent states closer to the goal state, thereby improving the robot motion planning in view of achieving the goal state.

In Example 5, the subject matter of any one of Examples 2 to 4 can optionally include that the respective new latent state associated with a corresponding random latent state is determined using a graph neural network dynamics model which is configured to predict a posterior latent state resulting from an action being applied in a prior latent state (with each of the posterior latent state and the prior latent state representing a respective latent object state for each object of the one or more objects).

The graph neural network dynamics model may allow to predict the posterior latent state in the present case of object-centric latent states as disclosed herein.

Example 6 is a (computer-implemented) method for controlling a robot device, the method including: determining the control trajectory for controlling the robot device according to any one of Examples 1 to 5; and controlling the robot device in accordance with the (determined) control trajectory.

Example 7 is a robot device controller configured to carry out the method of any one of Examples 1 to 6.

Example 8 is a robot device including: the robot device controller according to Example 7; and at least one perception sensor (e.g., a camera) configured to acquire the image sequence representing the surrounding of the robot device.

Example 9 is a computer program including instructions which, when executed by a computer, causes the computer to carry out the method according to any one of Examples 1 to 6.

Example 10 is a computer-readable medium including instructions which, when executed by a computer, causes the computer to carry out the method according to any one of Examples 1 to 6.

Example 11 is a method for training a robot motion planning model which includes an encoder, a transition dynamics model, a local policy, a global policy, and diffusion probabilistic model, the method including: for each trajectory of a plurality of predefined trajectories, acquiring a respective image sequence (of consecutive images) showing one or more (e.g., a plurality of) objects in a surrounding of the robot device during controlling the robot device to manipulate at least one object of the one or more objects according to the trajectory; training, using the respective image sequence of each of the plurality of predefined trajectories, the encoder to predict a latent state associated with a corresponding point in time responsive to inputting a sequence of consecutive images ending at the corresponding point in time, wherein the latent state represents a respective latent state for each object at the corresponding point in time; training, using the plurality of predefined trajectories, the respective image sequence of each of the plurality of predefined trajectories, and the encoder: the transition dynamics model to predict a posterior latent state resulting from an action being applied in a prior latent state, the local policy for determining one or more actions to transition from one state to another state, the global policy for determining actions to achieve a goal latent state; training, using the respective image sequence of each of the plurality of predefined trajectories and the encoder, a diffusion probabilistic model to generate a random latent state using a probability distribution which is conditioned on a context state representing a context of a surrounding of the robot device.

Example 12 is a data processing device configured to carry out the method of Example 11.

Example 13 is a computer program including instructions which, when executed by a computer, causes the computer to carry out the method according to Example 11.

Example 14 is a computer-readable medium including instructions which, when executed by a computer, causes the computer to carry out the method according to Example 11.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a robotic device arrangement according to various aspects; and
Figure 2 shows a flow diagram of a method for robot motion planning according to various aspects.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

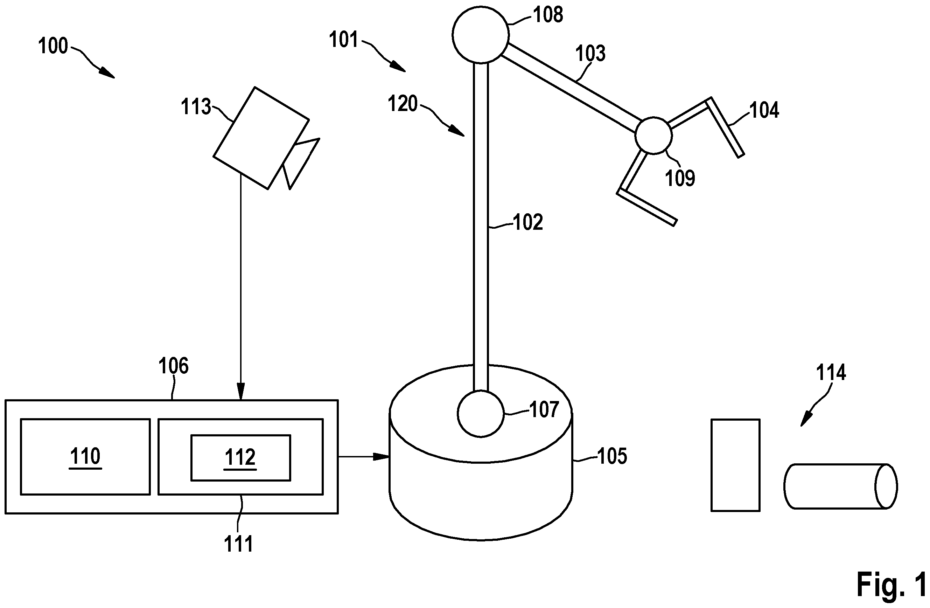

**FIG.1** shows a robotic device arrangement 100 according to various aspects. The robotic device arrangement 100 may include a robotic device 101 (short: robot). The robotic device 101 shown in FIG.1 and described below by way of example is an exemplary robotic device serving for illustration and may include, for example, an industrial robot in the form of a robot arm 120 for moving, assembling or machining a workpiece, for bin-picking, etc. It is noted that this robotic device serves for illustration and may, in general, be any type of computer-controlled device, such as a robot (e.g., a manufacturing robot, a maintenance robot, a domestic robot, a medical robot, etc.), a vehicle (e.g., an autonomous vehicle), a domestic appliance, a production machine, a personal assistant, an access control system, etc., as well as any other type of robotic device.

The robot arm 120 may include manipulators 102, 103, 104 and a base (or generally a support) 105 by which the manipulators 102, 103, 104 are supported. The term "manipulators " may refer to the movable parts of the robotic device 101 whose actuation enables physical interaction with the environment, e.g. to carry out a task, e.g. to carry out or more skills of the robotic device 101.

For control of the robotic device 101, the robotic device arrangement 100 may include a (robot) controller 106 configured to implement the interaction with the environment according to a control program. The last manipulator 104 (furthest from the support 105) of the manipulators 102, 103, 104 is also referred to as end-effector 104 and may include one or more tools such as a grasping (or gripping) tool. The grasping tool may also be a suction device (e.g. a suction head) or the like.

The other manipulators 102, 103 (closer to the support 105) may form a positioning device such that, together with the end-effector 104, the robot arm 120 with the end-effector 104 at its end is provided. The robot arm 120 may be a mechanical arm that can provide similar functions as a human arm.

The robot arm 120 may include joint elements 107, 108, 109 interconnecting the manipulators 102, 103, 104 with each other and with the support 105. A joint element 107, 108, 109 may have one or more joints, each of which may provide rotatable motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator may implement instructions issued by the controller 106 (the so-called activation) into mechanical movements. The actuator, e.g., an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 106 may include one or more processors 110 and a memory 111 storing code and data based on which the processor 110 controls the robot arm 120. According to various embodiments, the controller 106 controls the robot arm 120 on the basis of a robot control model (e.g. being configured to carry out a robot motion planning as detailed herein) 112 stored in the memory 111.

For example, the robot's task is to perform bin-picking, i.e. grasp an object of multiple objects 114 (wherein grasping also includes picking up the object 114 with a suction cup) and, for example, show the object 114 to a scanner or move the object 114 to another bin. To be able to determine the object 114 to pick up and to determine a suitable grasping location on the object 114, the controller 106 may use images of the robot's workspace where the objects 114 are located. These images may be provided by one or more imaging sensors 113 (e.g., attached to the robot arm 120 or in any other way such that the controller 106 may control the viewpoint of the one or more imaging sensors 113).

An imaging sensor, as used herein, may be, for example, a camera (e.g., a standard camera, a digital camera, an infrared camera, a stereo camera, etc.), a radar sensor, a LIDAR sensor, an ultrasound sensor, etc. Thus, an image may be an RGB image, an RGB-D image, or a depth image (also referred to as a D image). A depth image described herein may be any type of image that includes depth information. Illustratively, a depth image may have 3-dimensional information about one or more objects. For example, a depth image described herein may include a point cloud provided by a LIDAR sensor and/or a radar sensor. For example, a depth image may be an image with depth information provided by a LIDAR sensor.

The controller 106 may be configured to control the robot arm 120 based on an output of the robot control model 112 responsive to inputting the image into the robot control model 112. The robot control model 112 may include a reinforcement learning (RL) model.

It has been found that in model-based RL it is difficult to generate a model of the technical (physical) system (such as the robotic device 101) using visual information (e.g., images, such as RGB images) of its surrounding. This is, for example, due to the high-dimensionality of state observations, complicated state estimation and complicated transition dynamics.

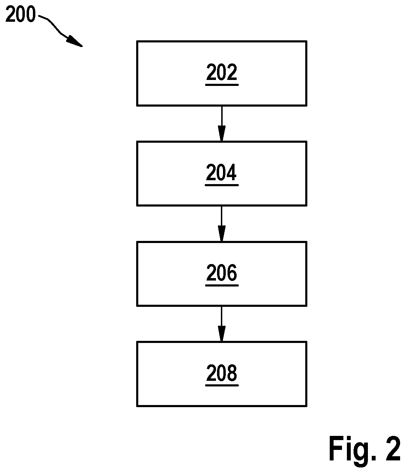

**FIG.2** shows a flow diagram of a (computer-implemented) method 200 for robot motion planning (employing the robot control model) according to various aspects.

This method 200 allows for a vision-based control of the robot device 101 (viz. a control based on images of the surrounding of the robot device 101) using model-based RL. This is, for example, achieved by defining object-centric latent states in combination with a sampling-based motion planning framework, thereby allowing to determine (target) robot trajectories in difficult control environments which require long-horizon reasoning. Using the object-centric latent states induces a relational inductive bias in the transition dynamics model which may be implemented using a graph neural network.

The method 200 may include (in 202) receiving an (e.g., RGB) image sequence ending at a corresponding point in time. The image sequence may show one or more (e.g., a plurality of) objects in a surrounding of the robot device 101 during a prior control of the robot device 101. In some aspects, the method 200 may include acquiring the image sequence during the prior control of the robot device 101. Hence, the robot device 101 may be controlled according to a prior determined control trajectory and during this control the image sequence may be acquired (e.g., using the one or more imaging sensors 113) showing the surrounding of the robot device 101.

An image sequence, as used herein, may be a sequence of consecutive images.

The method 200 may include (in 204) inputting the image sequence into an encoder to predict a current latent state. The current latent state may represent a respective latent object state for each object of the one or more objects at the corresponding point in time.

The method 200 may include (in 206) generating, using a rapidly exploring random tree (RRT) approach, a latent state graph starting from the current latent state. Each predicted latent state of the latent state graph may represent a respective predicted latent object state for each object of the one or more objects. Hence, each latent state in the latent state graph may be object-centric.

The method 200 may include (in 208) determining, by applying a (e.g., global) policy for solving a Markow Decision Process (MDP) on the latent state graph, a control trajectory for controlling the robot device 101 to achieve a goal state.

In the following, various aspects of the method 200 are described in further detail.

The image sequence, $O_k$, may be a sequence of $k$ consecutive images $o_{t=t^*-k:t^*}$ (with t* being the corresponding point in time at which the image sequence, $O_k$, ends). The number k may be any integer number equal to or greater than two.

The (e.g., deterministic) encoder (may also be referred to as encoder model), $\phi$, may be (e.g., trained to be) configured to map the image sequence, $O_k$, to the (predicted) current latent state $z_{t^*} \in Z$ (viz. $O_k \rightarrow Z$). As detailed herein, the current latent state, $z_{t^*}$, may represent a respective latent object state for each object of the one or more objects (shown in the surrounding of the robotic device 101) at the corresponding point in time, t*: $z \in Z = Z_1 \times Z_2 \times ... \times Z_n$ (with n being the number of objects shown in the scene). Thus, the current latent state, $z_{t^*}$, may represent the respective latent object state, $Z_i$, of each object, $i$, of the one or more objects i = 1 to n. The current latent state, $z_{t^*}$, may be state in which the robotic device 101 is currently in.

Hence, according to various aspects, the underlying system state of the robotic device 101 may not be directly perceived but estimated through the observed history of image observations $o_t \in O$.

To detect the one or more objects, i = 1 to n, in the images of the image sequence, $O_k$, the robot control model 112 may include an object detection model. This object detection model may, for example, include a segmentation model (e.g., a segmentation foundation model). Hence, the object detection may allow to determine the number of objects, n, as well as a respective segmentation mask $m_t = \{m_t^i\}_{i=1}^n$ for each time step t. The masked image observation $o_t^i$ may represent the (masked) object i at time step t. According to various aspects, the encoder may be configured to map a sequence of masked image observations $o_{t=t*-k:t*}^i$ of a respective object, i, to the respective latent object state $z_{t*}^i$. The current latent state $z_{t*}$ may then include the respective latent object state $z_{t*}^i$. of each of the one or more objects, i = 1 to n.

Hence, in some aspects inputting the image sequence into the encoder (in 204) may include determining a respective masked object representation $o_{t=t*-k:t*}^i$ (e.g., via detecting the respective segmentation mask $\{m_t^i\}_{i=1}^n$) for each object, i, in each image, $o_{t-t^*-k:t^*}$, of the image sequence, $O_k$; and, for each object, i, of the one or more objects, i = 1 to n, determining the respective latent object state, $z_{t*}^i$, by inputting the sequence of masked image observations $o_{t=t*-k:t*}^i$ of the object, i, into the encoder. The combination of the respective latent object states, $z_{t*}^{i=1 \, to \, n}$, may then represent the (predicted) current latent state $z_{t^*}$. An exemplary generation of the latent state graph using the RRT approach is detailed in algorithm 1. As detailed herein each latent state, z, of the latent state graph may be object-centric, viz. representing a respective latent object state, $z_t^i$, for each object, i, at a time step t. The latent state graph $G(\mathcal{V}, \varepsilon)$ may include nodes $\mathcal{V}$ and edges $\varepsilon$. Each node may represent a latent state z, and each edge between two nodes (viz. between two latent states) may represent a control action, a, which changes the system from one of the two latent states to the other one.

---

---

**Algorithm 1: RRT-based robot motion planning**

---

---

1:     Initialize: $\mathcal{V} \leftarrow \{z_{init}\}, \mathcal{E} \leftarrow \emptyset$

2:     $Z_{rand} \leftarrow$ SAMPLE_GLOBALLY$(z_c)$

      A set $Z_{rand}$ of random samples $z_{rand}$ is samples according to algorithm 2.

3:     for a number of $n_{iter}$ iteration steps do

4:         Select random sample from $Z_{rand}$:

5:         $z_{rand} \leftarrow SAMPLE(Z_{rand})$

6:         Determine nearest neighbor in currently generated tree:

7:         $z_{near} \leftarrow NEAREST\_NODE(z_{rand}, \mathcal{V})$

8:         Simulate forward using dynamics for $n_{sim}$ simulation steps:

9:         $z_{new} \leftarrow z_{near}$

10:        for $n_{sim}$ steps do

11:           $a_\pi \leftarrow \pi^l(z_{new}, z_{rand})$

12:           $z_{new} \leftarrow h(z_{new}, a_\pi)$

13:        end for

14:        Optionally reject node if node is too close to existing node in the tree and/or if uncertainty is too high

15:        if $Q_{min}^{near,new} > \tau_{discard}^{low}$ and $Q_{std}^{near,new} < \tau_{discard}^{std}$ then

16:           if $\max\{Q_{min}^{i,new}|z_i \epsilon \mathcal{V}\} < \tau_{discard}^{high}$ then

17:              Add node if not too close to existing node

18:              $\mathcal{V} \leftarrow \mathcal{V} \cup \{z_{new}\}$

19:              $\mathcal{E} \leftarrow \mathcal{E} \cup \{z_{near} \rightarrow new\}$

20:           end if

21:        end if

22:   end for

---

---

To employ the RRT-based robot motion planning, it may be required to globally sample random latent states $z_{rand} \in Z_{rand}$ from the latent state space (see line 2 of algorithm 1). According to various aspects, this is achieved by using a diffusion probabilistic model (short: diffusion model). An exemplary global sampling is detailed in algorithm 2.

In some aspects (see line 6 of algorithm 2), the diffusion probabilistic model may be configured to sample a random latent state $z_{rand}$ according to a probability distribution, p, which is conditioned on a context state, $z_c$ (viz $z_{rand} \sim p(\cdot | z_c)$). The context state, $z_c$, may represent a context of the surrounding of the robot device 101. This may ensure that the generated random latent state $z_{rand}$ are relevant given the configuration of the current scene. As an example, given a setting with one non-moving object, a useful context state, $z_c$, could for example be formed by taking the corresponding object-specific latent encoding, $z_i$.

In some aspects (see lines 7 to 9 of algorithm 2), the diffusion probabilistic model may be configured to generate a random latent state $z_{rand}$ using the goal state (which may also be referred to as using guidance). For this, the random latent state $z_{rand}$ may be sampled from a probability distribution (e.g., $\mathcal{N}(\mu, \Sigma)$ having a mean value ($\mu$) in the vicinity of the goal state (thereby being biased to generate random latent states closer to the goal state) (with use_guidance = TRUE). For example, a global value function $Q^g$ ($Q^g: Z \times A \to R_{\geq 0}$) and a global policy $\pi^g$ ($\pi^g: Z \to A$) of a global (RL) agent may be used for this purpose. The global value function $Q^g$ may indicate an estimate of the remaining number of steps to the goal state.

---

**Algorithm 2: SAMPLE_GLOBALLY**

---

1:     Initialize: $Z_{rand} = \emptyset$

2:     for $n_{random}$ steps do

3:        use_guidance $\leftarrow$ TRUE with using probability p, otherwise FALSE

4:        $z_{rand} \leftarrow$ sample from $\mathcal{N}(0, \mathrm{I})$

5:        for t=T...1 do

6:           $\mu \leftarrow \mu_\theta(z_{rand}, z_c)$

7:           if use_guidance is TRUE and t $\leq$ T then

8:              $\mu \leftarrow \mu + s\Sigma \nabla_{zrand} logQ^g(z_{rand}, \pi^g(z_{rand}))$

9:           end if

10:           $z_{rand} \leftarrow$ sample from $\mathcal{N}(\mu, \Sigma)$

11:        end for

12:        $Z_{rand} \leftarrow Z_{rand} \cup \{z_{rand}\}$

13:     end for

14:     return $Z_{rand}$

---

Then, new latent states, $z_{new}$, may be determined using each random latent state, $z_{rand}$, of the plurality of random latent states $Z_{rand}$, and may be added to the latent state graph in accordance with the RRT approach (see algorithm 1).

In accordance with RRT, a nearest latent state, $z_{near}$, which is nearest to the random latent state, $z_{rand}$, within the already generated latent state graph is determined (see line 7 of algorithm 1). Using a graph neural network dynamics model, h ($h: Z \times A \to Z$), (which is configured to predict a posterior latent state resulting from an action being applied in a prior latent state) (and using a local policy $\pi^l$ ($\pi^l: Z \times Z \to A$) of a global (RL) agent), the new latent state, $z_{new}$, (representing a node in the latent state graph) and a corresponding control action, a, (representing an edge in the latent state graph) may be determined (see lines 9 to 13 of algorithm 1).

According to various aspects (see lines 14 to 21 of algorithm 1), the determined new latent state, $z_{new}$, may only be added to the latent state graph if the uncertainty associated with the new latent state, $z_{new}$, is less than a predefined threshold value and/or if the new latent state, $z_{new}$, has a minimum threshold distance to an already existing latent state in the latent state graph. For this, Q-networks of a local value function , $Q^l$ ($Q^l: Z \times A \times Z \to R_{\geq 0}$.) of a local agent may be employed. An ensemble $n_{ens}$ Q-networks ( $\{Q^l_1, ..., \{Q^l_{nens}\}$ ) may be used as detailed in reference [1]. The minimum and the standard deviation of the ensemble may be defined as $Q^{i,j}_{min}$ and $Q^{i,j}_{std}$ , respectively; with:

$$Q^{i,j}_{min} = \min\{Q^l_1(z_i, z_j, \pi^l(z_i, z_j)), \ldots, Q^l_{n_{ens}}(z_i, z_j, \pi^l(z_i, z_j))\}, \text{ and}$$

$$Q^{i,j}_{std} = \mathrm{std}\{Q^l_1(z_i, z_j, \pi^l(z_i, z_j)), \ldots, Q^l_{n_{ens}}(z_i, z_j, \pi^l(z_i, z_j))\}$$

. Illustratively, the (learned) ensemble of state-conditioned Q-functions may be used to infer a temporal distance proxy and graph expansions may be rejected if the corresponding value uncertainty for that transition is large (viz. above the corresponding threshold value) and/or if the estimated distance is above a certain threshold, and/or if the graph already contains a node that is sufficiently close to the new one.

Once the latent state graph is determined, the control trajectory for controlling the robot device 101 (to achieve the goal state) is determined (in 208) by reinforcement learning (employing the MDP on the latent state graph (for sequential decision-making)). According to various aspects, the robotic device 101 may be controlled sequentially using a hierarchical control architecture that combines lookahead planning and a low-level reactive trajectory following controller. The control trajectory may include a sequence of successive control actions (go transition through the latent state graph from the current latent state to the goal state).

According to various aspects, the planning may result in a sequence of latent state vectors from the current latent state to the local policy $\pi^l$ may be used to determine a sequence of control actions to transitions from one state to another state within the sequence of latent state vectors.

While in the above embodiments, the approach of FIG.2 is applied to control the robot arm 120, it may be applied for computing a control signal for controlling any technical system in a scenario where vision-based robot control plays a role, such as a computer-controlled machine, like a robot, a vehicle, a domestic appliance, a manufacturing machine, etc.

In the following, various aspects of generating (e.g., learning and/or training) above-detailed model are described in further detail. According to various aspects, the model may be generated (e.g., learned or trained) while the robotic device 101 is inoperative (viz. offline).

Generating the robot motion planning model may include learning (e.g., training) the encoder, the graph neural network dynamics models (may also be referred to as transition dynamics model), the local (RL) agent, the global (RL) agent, and the diffusion probabilistic model.

For this, a plurality of image sequences may be acquired by controlling the robotic device 102 in accordance with a plurality of control trajectories $\{\tau_1, \tau_2, ..., \tau_N\}$. A respective image sequence (of consecutive images) showing objects 114 in the surrounding of the robotic device 101 may be acquired by controlling the robotic device 102 in accordance with a corresponding control trajectory of the plurality of control trajectories. The plurality of control trajectories $\{\tau_1, \tau_2, ..., \tau_N\}$ may be determined using a scripted exploration policy, using tele-operation, or using a combination of both.

The encoder may then be trained, using the respective image sequence of each of the plurality of control trajectories, to predict a latent state associated with a point in time responsive to inputting a sequence of consecutive images ending at the point in time, wherein the latent state represents a respective latent state for each object shown in the sequence of consecutive images. As detailed herein, in some aspects, the encoder may be trained to output the respective latent object state, $z_{t*}^i$, responsive to inputting the sequence of masked image observations $o_{t=t*-k:t*}^i$ of the object, i, into the encoder. In this case, the latent object states, $z_{t*}^i$, of all objects may then be combined The respective latent object states, $z_{t*}^{i=1\,to\,n}$, of all objects, i = 1 to n, may then be combined to the (predicted) current latent state $z_{t*}$. As an example, the encoder may be trained using the encoder loss $\mathcal{L}_\phi$ given in equation (1) with $k_{global}$ and $k_{local}$ being weight factors.

$$\mathcal{L}_\phi = k_{\text{global}} \cdot \mathcal{L}_\phi^{\text{global}} + k_{\text{local}} \cdot \mathcal{L}_\phi^{\text{local}} \tag{1}$$

The local loss $\mathcal{L}_\phi^{\text{local}}$ may be given by:

$$\mathcal{L}_\phi^{\text{local}} = -\mathbb{E}_{\mathcal{D}}\left[ \sum_{i=1}^{n} \frac{e^{-d(z_{t+1}^i, \hat{z}_{t+1}^i)/T}}{\sum_j e^{-d(z_j^i, \hat{z}_{t+1}^i)/T}} \right]$$

The global loss $\mathcal{L}_\phi^{\text{global}}$ may be given by:

$$\mathcal{L}_\phi^{\text{global}} = -\mathbb{E}_{\mathcal{D}}\left[ \frac{e^{-d(z_{t+1}, \hat{z}_{t+1})/T}}{\sum_j e^{-d(z_j, \hat{z}_{t+1})/T}} \right]$$

wherein $d(,)$ is a predefined similarity metric, such as a similarity metric based on the squared Euclidian distance $d(z, z') = e^{-\|z-z'\|^2}$, and $T$ is the temperature hyper-parameter.

The graph neural network dynamics models may be trained to predict a posterior latent state resulting from an action being applied in a prior latent state. In some aspects, the graph neural network dynamics models may be configured to map a prior (current) latent object state $o_t^i$ to a posterior latent object state $o_{t+1}^i$ given a corresponding control action a. In this case, the posterior latent state $z_{t+1}$ may be a combination of all posterior latent object states $o_{t+1}^{i=1\ to\ n}$.

The local agent may include the local policy $\pi^l$ and the local value function , $Q^l$, and may be trained in a self-supervised fashion using hindsight relabeling techniques. The global agent may include the global policy $\pi^g$ and the global value function $Q^g$ and may be trained to maximize the expected return with respect to the environment rewards rt. The trained global agent may allow to determine control actions to reach the goal state in a fewest number of state transitions. For training the local agent and the global agent, see equations (2) to (5) in reference [1].

The diffusion probabilistic model may be trained to generate a random latent state using a probability distribution (which is optionally conditioned on the context state).

According to various aspects, the encoder and the graph neural network dynamics models may be trained (e.g., optimized) together, thereby improving the learning speed.

**Claims**

1. A method (200) for robot motion planning, the method (200) comprising:

   • receiving (202) an image sequence ending at a corresponding point in time, wherein the image sequence shows one or more objects in a surrounding of a robot device (101) during a prior control of the robot device (101);
   • inputting (204) the image sequence into an encoder to predict a current latent state, wherein the current latent state represents a respective latent object state for each object of the one or more objects at the corresponding point in time;
   • generating (206), using a rapidly exploring random tree, RRT, approach, a latent state graph starting from the current latent state, wherein each predicted latent state of the latent state graph represents a respective predicted latent object state for each object of the one or more objects;
   • determining (208), by applying a policy for solving a Markow Decision Process on the latent state graph, a control trajectory for controlling the robot device (101) to achieve a goal state.

2. The method (200) according to claim 1,
   wherein generating (206) the latent state graph comprises:

   • sampling a plurality of random latent states using a diffusion probabilistic model;
   • determining, using each random latent state of the plurality of random latent states, and adding new latent states to the latent state graph in accordance with the RRT approach.

3. The method (200) according to claim 2,
   wherein generating (206) the latent state graph comprises determining a context state representing a context of the surrounding of the robot device (101), wherein the diffusion probabilistic model is configured to generate each of the plurality of random latent states according to a probability distribution which is conditioned on the context state.

4. The method (200) according to claim 2 or 3,

   wherein the diffusion probabilistic model is configured to generate each of the plurality of random latent states using the goal state;
   wherein optionally the diffusion probabilistic model is configured to generate a respective random latent state of the plurality of random latent states using a probability distribution having a mean value in the vicinity of the goal state.

5. The method (200) according to any one of claims 2 to 4,
   wherein the respective new latent state associated with a corresponding random latent state is determined using a graph neural network dynamics model which is configured to predict a posterior latent state resulting from an action being applied in a prior latent state.

6. A method for controlling a robot device (101), the method comprising:

   • determining the control trajectory for controlling the robot device (101) according to any one of claims 1 to 5; and
   • controlling the robot device (101) in accordance with the control trajectory.

7. A robot device controller (106) configured to carry out the method (200) of any one of claims 1 to 6.

8. A robot device (100), comprising:

   • the robot device controller (106) according to claim 7; and
   • at least one perception sensor (113) configured to acquire the image sequence representing the surrounding of the robot device (100).

9. A computer program comprising instructions which, when executed by a computer, causes the computer to carry out the method (200)according to any one of claims 1 to 6.

10. A computer-readable medium comprising instructions which, when executed by a computer, causes the computer to carry out the method (200) according to any one of claims 1 to 6.

Fig. 1

200

```
┌─────────────┐
│     202     │
└─────────────┘
       │
       ▼
┌─────────────┐
│     204     │
└─────────────┘
       │
       ▼
┌─────────────┐
│     206     │
└─────────────┘
       │
       ▼
┌─────────────┐
│     208     │
└─────────────┘
```

Fig. 2

Europäisches
Patentamt

European
Patent Office

Office européen
des brevets

## EUROPEAN SEARCH REPORT

**Application Number**

EP 24 19 3837

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ICHTER BRIAN ET AL: "Robot Motion Planning in Learned Latent Spaces", IEEE ROBOTICS AND AUTOMATION LETTERS, IEEE, vol. 4, no. 3, 1 July 2019 (2019-07-01), pages 2407-2414, XP011717311, DOI: 10.1109/LRA.2019.2901898 [retrieved on 2019-03-29] | 1,2,6-10 | INV. B25J9/16 |
| A | * the whole document * | 3-5 | |
| X | XIAOLIN FANG ET AL: "DiMSam: Diffusion Models as Samplers for Task and Motion Planning under Partial Observability", ARXIV.ORG, CORNELL UNIVERSITY LIBRARY, 201 OLIN LIBRARY CORNELL UNIVERSITY ITHACA, NY 14853, 22 June 2023 (2023-06-22), XP091545282, | 1,2,6-10 | |
| A | * the whole document * | 3-5 | |
| A | MORALES EDUARDO F ET AL: "A survey on deep learning and deep reinforcement learning in robotics with a tutorial on deep reinforcement learning", INTELLIGENT SERVICE ROBOTICS, SPRINGER BERLIN HEIDELBERG, BERLIN/HEIDELBERG, vol. 14, no. 5, 1 November 2021 (2021-11-01), pages 773-805, XP037635325, ISSN: 1861-2776, DOI: 10.1007/S11370-021-00398-Z [retrieved on 2021-11-16] * the whole document * | 1-10 | TECHNICAL FIELDS SEARCHED (IPC) B25J G06N G06V |
| A | US 2024/096077 A1 (LUO JIANLAN [US] ET AL) 21 March 2024 (2024-03-21) * paragraph [0021] - paragraph [0075] * | 1-10 | |

-/--

The present search report has been drawn up for all claims

| Place of search | Date of completion of the search | Examiner |
|---|---|---|
| The Hague | 13 February 2025 | Cîrîc, George |

Europäisches
Patentamt

European
Patent Office

Office européen
des brevets

# EUROPEAN SEARCH REPORT

**Application Number**

EP 24 19 3837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/331962 A1 (PIRK SOEREN [US] ET AL) 20 October 2022 (2022-10-20) * paragraph [0042] - paragraph [0107] * ----- | 1-10 | |

TECHNICAL FIELDS
SEARCHED        (IPC)

The present search report has been drawn up for all claims

| Place of search | Date of completion of the search | Examiner |
|---|---|---|
| The Hague | 13 February 2025 | Cîrîc, George |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 3837

This annex lists the patent family members relating to the patent documents cited in  the above-mentioned European search report.
The members are as contained in the European Patent Office EDP file on
The European Patent Office is in no way liable for these particulars which are merely given for the purpose of information.

13-02-2025

| Patent document cited in search report | | Publication date | Patent family member(s) | | Publication date |
|---|---|---|---|---|---|
| US 2024096077 | A1 | 21-03-2024 | NONE | | |
| US 2022331962 | A1 | 20-10-2022 | CN | 114423574 A | 29-04-2022 |
| | | | CN | 118789549 A | 18-10-2024 |
| | | | EP | 4003665 A1 | 01-06-2022 |
| | | | US | 2022331962 A1 | 20-10-2022 |
| | | | WO | 2021050488 A1 | 18-03-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. GIESELMANN et al.** Expansive Latent Planning for Sparse Reward Offline Reinforcement Learning. *7th Conference on Robot Learning (CoRL*, 2023